# EUROPEAN PATENT APPLICATION

(11) **EP 3 929 475 A1**
(43) Date of publication of application: **29.12.2021**
(21) Application number: 21180874.6
(22) Date of filing: 22.06.2021
(51) Int. Cl.: F16K 25/00, F16K 1/42, F24D 19/10, G05D 16/06, F24D 19/00, G05D 16/00, G05D 16/16, F16K 17/26

(54) **PRESSURE RESPONSIVE VALVE**

(30) Priority: 25.06.2020 DK PA202070416
(71) Applicant: Danfoss A/S, 6430 Nordborg (DK)
(72) Inventor: AVSENIK, Robert, entvid (SI); ZAGAR, Tomaz, Notranje Gorice (SI); OMEJC, Luka, Kranj (SI); URBAS, Simon, Ljubljana (SI)
(74) Representative: Stevens, Brian

(57) **Abstract**

A pressure-controlled valve (100) comprising at least one fluid inlet (101) and at least one fluid outlet (102), a pressure responsive valve seat (103), a pressure responsive valve element (104) arranged movably with respect to the pressure responsive valve seat, a diaphragm (105) which controls the position of the pressure responsive valve element with respect to the pressure responsive valve seat, and a biasing element (106) configured to bias the pressure responsive valve element in a direction away from the pressure responsive valve seat.
The pressure responsive valve element is formed with a wall (160) enclosing an internal space (170) and having a valve edge (150) forming the contact to the valve seat, where the valve seat is formed with a shape curving towards the valve edge.

## Description

### BACKGROUND

The present invention relates to a pressure-controlled valve comprising at least one fluid inlet and at least one fluid outlet, a pressure responsive valve seat, a pressure responsive valve element arranged movably with respect to the pressure responsive valve seat, a may be introduced diaphragm which controls the position of the pressure responsive valve element with respect to the pressure responsive valve seat, and a biasing element may be configured to bias the pressure responsive valve element in a direction away from the pressure responsive valve seat.

The pressure responsive valve element may be cup-shaped formed with a wall enclosing an internal space and having a valve edge forming the contact to a valve seat, where the biasing element may be positioned within the internal space. When the pressure responsive element e.g. is connected to a diaphragm deflecting under changing pressures, there are no further means to direct it along a straight line of movement, and it may therefore wobble, or deflect slightly, forming a misalignment of the edge of the walls towards the valve seat even when supposed closed, thus forming leakage.

### SUMMARY OF THE INVENTION

The object is solved according to the features given in the claim section. This includes introducing a valve comprising a valve element with a wall enclosing an internal space and having a valve edge forming the contact to a valve seat, where the valve seat is formed with a shape curving towards the valve edge.

In one embodiment the valve seat is curving with a convex shape towards the valve edge.

The valve seat may be curving with a circular shape towards the edge.

The valve seat may be formed with an opening, said edge adapted to contact the valve seat at a circumference of said opening.

The curvature of the valve seat is formed such that when the valve element is in closed position, then the full circumference of said edge is in contact with said valve seat at a full circumference of the opening.

The valve element may be adapted to move along a line in an opening and closing direction of the valve element relative to the valve seat.

In an embodiment the valve element is only attached to a diaphragm and thus moves unguided to the extent that it can depart slightly in its movement from the line under the restriction of the inner wall of a valve chamber wherein the valve element is positioned.

In an embodiment the valve element is free to wobble slightly relative to the line.

In an embodiment the wall at the opposite end to the valve edge is connected to a diaphragm.

In an embodiment a biasing element is to be positioned within the internal space.

The valve may be a pressure-controlled valve where the valve element is a pressure responsive valve element.

The pressure-controlled valve may further comprise a flow control part which comprises a flow control valve seat, a valve stem, and a flow control valve element.

In an embodiment, rather than having a convex shape, the valve seat curves with a concave shape towards the valve edge. This embodiment combines with any of the previous embodiments only replacing the convex shape with the concave.

### FIGURES

- Fig. 1: Embodiment of a pressure responsive valve with a cup-shaped pressure responsive valve element.
- Fig. 2A, 2B: Two embodiment cup-shaped pressure responsive valve elements.
- Figs. 3A-C: Examples of the problems with prior systems with unguided cup-shaped pressure responsive valve elements operating with a valve seats.
- Figs. 4A, B: Embodiment of the present invention with a valve seat formed with a convex shape towards the pressure responsive valve element.
- Fig. 5: Embodiment of the present invention with a valve seat formed with a concave shape towards the pressure responsive valve element.

### DETAILED DESCRIPTION OF THE INVENTION

It should be understood, that the detailed description and specific examples, while indicating embodiments of the invention, are given by way of illustration only, since various changes and modifications within the spirit and scope of the invention will become apparent to those skilled in the art from the detailed description.

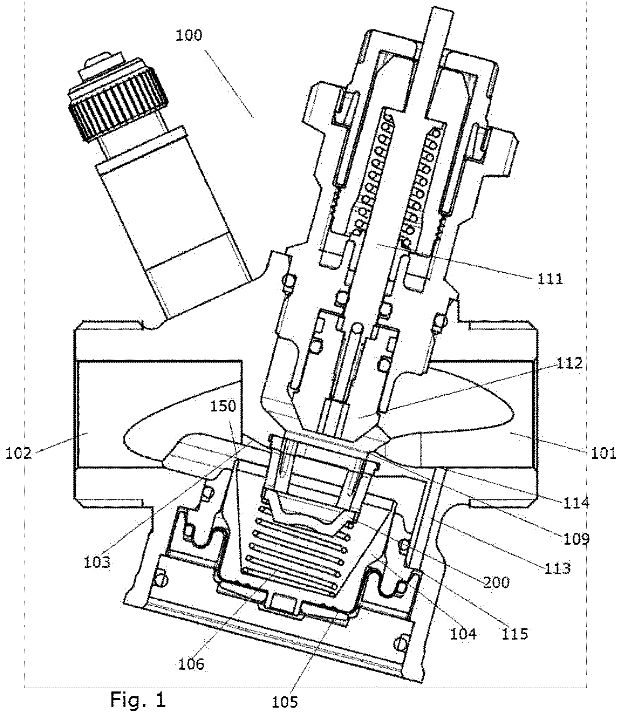

Fig. 1 is a cross sectional view of an embodiment pressure-controlled valve (100) where the present invention with advantage could be implemented. The pressure-controlled valve (100) shown in Fig. 1 comprises one fluid inlet (101) and one fluid outlet (102), a pressure responsive valve seat (103), a pressure responsive valve element (104), a diaphragm (105), a biasing element (106), and an optional insert element (200).

The pressure responsive valve element (104) is arranged movably with respect to the pressure responsive valve seat (103) within a valve chamber having an inner surface. The pressure responsive valve element (104) is not contacted to any guiding means, but moves unguided in the sense it is allowed to wobble and is only restricted by its connection to the diaphragm (105) and the inner surface wall of the valve chamber.

The position of the pressure responsive valve element (104) with respect to the pressure responsive valve seat (103) defines a first opening degree of the pressure-controlled valve (100).

The diaphragm (105) has a first side (top) and a second side (lower). The first side of the diaphragm (105) is in contact with the pressure responsive valve element (104) and is exposed to a first pressure P1. The second side of the diaphragm (105) is exposed to a second pressure P2. The diaphragm (105) is configured to deflect in response to variations in a pressure difference between the first (P1) and second (P2) pressure and thereby control the position of the pressure responsive valve element (104) with respect to the pressure responsive valve seat (103).

The biasing element (106) is configured to bias the pressure responsive valve element (104) in a direction away from the pressure responsive valve seat (103).

The pressure-controlled valve (100) further comprises a flow control part which comprises a flow control valve seat (109), one channel connecting the inlet (101) and the outlet (102), a valve stem (111), and a flow control valve element (112). The flow control valve element (112) is arranged movably with respect to the flow control valve seat (109). The position of the flow control valve element (112) with respect to the flow control valve seat (109) defines a second opening degree of the flow control part of the pressure-controlled valve (100).

The opening (300) in the valve seat (103) forms part of the fluid flow path from inlet (101) to outlet (102).

The pressure-controlled valve (100) is further provided with a pressure conduit (113). The pressure conduit (113) has a first end (114) and a second end (115). The first end (114) of the pressure conduit (113) is in pressure communication with the inlet (101) therefore the pressure from the inlet (101) is reflected through the conduit (113) to the second side of the diaphragm (105) as the second end (115) of the pressure conduit (113) is in pressure communication with the second side of the diaphragm (105). The first side of the diaphragm (105) is exposed to the pressure at the outlet (102) via the insert element (200) and first valve element (104). The pressure difference acting on the diaphragm (105) is therefore a difference between pressures at the outlet (102) and inlet (101). If, for instance, the pressure at the outlet (102) is higher than the one at the inlet (101), the diaphragm (105) will deflect in the direction away from the pressure responsive valve seat (103), increasing the first opening degree of the valve (100).

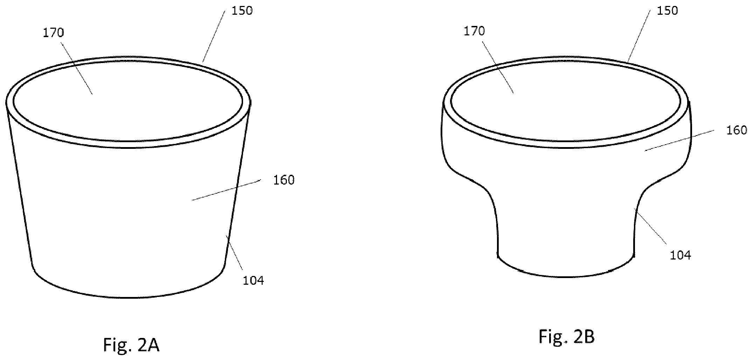

Figs. 2A and 2B illustrate embodiments of valve elements (104) where the present invention with advantage could be applied. The illustrated valve elements (104) is essentially 'cup'-shaped forming of a wall (160) enclosing an internal space, or hollow, (170), such as at the full circumference.

At the one end the walls have a valve edge (150) with a curving circumference, such as circular, oval, oblong etc. The valve edge (150) is configured to the part operating in connection to the valve seat (103) defining the first opening degree of the pressure-controlled valve (100).

At the second end of the walls the vale element (104) is closed and may be connected to the diaphragm (105). By the term 'closed' means either the valve element (104) itself being formed with a bottom wall being an integral part of the wall (160), or that wall (160) is attached to an element forming the bottom wall, such as the diaphragm (105).

The wall (160) may form a straight shape (fig. 2A) or curved shape (fig. 2B) or have any other suitable shape.

The internal space (170) of the valve element (104) is configured to accomodate the biasing element (106) configured to bias the pressure responsive valve element (104) in a direction away from the pressure responsive valve seat (103), and thus is positioned between the bottom of the valve element (104) and the valve seat (103).

No other guiding means like a valve stem etc. is positioned within the internal space (170) in the illustrated embodiments.

Fig. 1 illustrates an embodiment where an insert element (200) is squeezed between the valve seat (103) and the biasing element (106), and in the same manner an insert could be squeezed between the bottom of the valve element (104) and the biasing element (106). Such insert elements however are optional, the biasing element (106) could simply contact respectively the valve seat (103) and/or bottom of the valve element (104) directly.

The valve element (104) is moving under the deflection of the diaphragm (105) and under the tension of the biasing element (106). In embodiments such as illustrated in fig. 1 there are no further guiding elements of the movement of the valve element (104) to follow a straight line along an axis (190), but due to changes in the diaphragm (105) deflections and under the interacting forces of the fluid flow, the valve element (104) may wobble along around the axis (190), meaning it may be pushed slightly off the possible symmetric alignment to the axis.

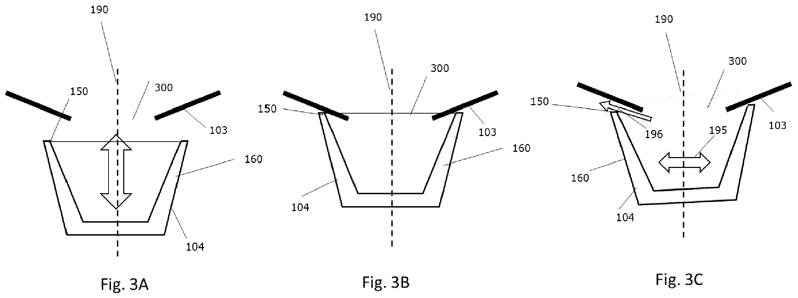

This situation is illustrated in figs. 3A-3C, where fig. 3A illustrate the valve element (104) at an open position relative to the valve seat (103). Other elements like diaphragm (105) etc are not shown. The valve element (104) is adapted to move in an opening and closing direction (the double arrow) relative to the valve seat (103) along the line (190). An opening direction refers to the valve element (104) moving way from the valve seat (103) and a closing direction refers to it is moving towards the valve seat (103). Fig. 3B illustrates a closes position where the valve edge (150) is in contact to the valve seat (103) at the full circumference of the opening (300).

Fig. 3C however illustrate a situation where the valve element (104) has become slightly off alignment (195) with the axis (190), and even though the valve element (104) should be in a closed position, there no not contact (196) at the full circumference, leading to leaking fluids.

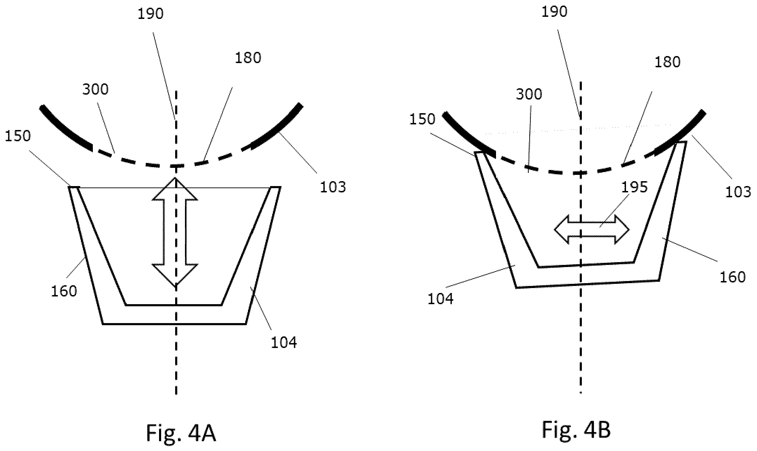

Figs. 4A and 4B illustrate an embodiment solution, where at least the outer surface of the valve seat (103) has a convex curvature (180) relative to the valve element (104). If e.g. the valve edge (150) e.g. is circular, the curvature (180) with advantage could be ball shaped, where it follows a circular shape seen from any direction.

In other embodiments the valve edge (150) follows e.g. other curvatures, like oval and oblong shapes, and the valve seat (103) curvature (180) then is shaped to mirror the valve edge (150) curvature at a corresponding circumference curve of the valve edge (150) projected onto the valve seat (150). This could be in the sense that for each point on the projected valve edge (150) curve onto the valve seat (103) in a direction parallel to the tangent, the curvature (180) follows a curvature to that of the valve edge tangent at the same position of the valve edge (150). In a reverse embodiment, the curvature of the orthogonal curve to the tangent of the point of the projected curve on the valve seat (103) is similar shaped to that of the tangent at the same position of the valve edge (150),

In other embodiments the valve seat (103) curvature (180) is ball shaped independent of the valve edge (150) curvature.

In one related embodiment the curvature of the ball shaped curvature (180) has the same curvature as the circular shape curvature of the valve edge (150).

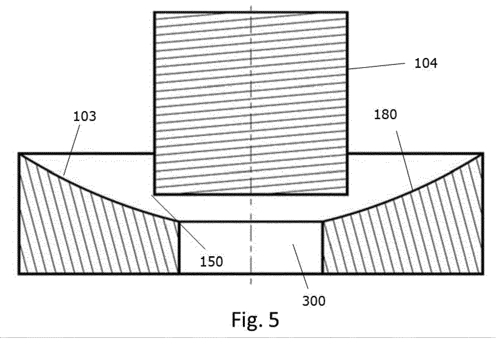

Fig. 5 shows an alternative embodiment where the valve seat (103) curves concaves towards the valve edge (150).

## Claims

1. Valve (100) comprising a valve element (104) with a wall (160) enclosing an internal space (170) and having a valve edge (150) forming the contact to a valve seat (103), where the valve seat (103) is formed with a shape curving towards the valve edge (150).

2. Valve (100) according to claim 1, wherein valve seat (103) curves with a convex shape towards the valve edge (150).

3. Valve (100) according to claim 1 or 2, wherein valve seat (103) curves with a circular shape towards the edge (150).

4. Valve (100) according to any of claims 1-3, wherein the valve seat (103) is formed with an opening (300), said edge (150) adapted to contact the valve seat (103) at a circumference of said opening (300).

5. Valve (100) according to claim 4, wherein the curvature of the valve seat (103) is formed such that when the valve element (104) is in closed position, then the full circumference of said edge (150) is in contact with said valve seat (103) at a full circumference of the opening (300).

6. Valve (100) according to any of the previous claims, wherein the valve element (104) is adapted to move along a line (190) in an opening and closing direction of the valve element (104) relative to the valve seat (104).

7. Valve (100) according to claim 6, wherein the valve element (104) is only attached to a diaphragm (105) and thus moves unguided to the extent that it can depart slightly in its movement from the line (190) under the restriction of the inner wall of a valve chamber wherein the valve element (104) is positioned.

8. Valve (100) according to claim 7, wherein the valve element (104) is free to wobble slightly relative to the line (190).

9. Valve (100) according to any of the previous claims, wherein the wall (160) at the opposite end to the valve edge (150) is connected to a diaphragm (105).

10. Valve (100) according to any of the previous claims, wherein a biasing element (106) is to be positioned within the internal space (170).

11. Valve (100) according to any of the previous claims, wherein the valve is a pressure-controlled valve (100) the valve element (104) being a pressure responsive valve element (104)

12. Valve (100) according to claim 11, wherein the pressure-controlled valve (100) further comprises a flow control part which comprises a flow control valve seat (109), a valve stem (111), and a flow control valve element (112).

13. Valve (100) according to claim 1, wherein valve seat (103) curves with a concave shape towards the valve edge (150).
